Europäisches Patentamt

European Patent Office

Office européen des brevets

(11) Veröffentlichungsnummer: **0 417 728 A2**

(12) # EUROPÄISCHE PATENTANMELDUNG

(21) Anmeldenummer: 90117477.1

(22) Anmeldetag: 11.09.90

(51) Int. Cl.5: **H04N 5/44**

(30) Priorität: 12.09.89 DE 3930435

(43) Veröffentlichungstag der Anmeldung:
20.03.91 Patentblatt 91/12

(84) Benannte Vertragsstaaten:
**BE DE FR GB IT NL SE**

(71) Anmelder: **Siemens Aktiengesellschaft**
**Wittelsbacherplatz 2**
**W-8000 München 2(DE)**

(72) Erfinder: **Dangschat, Rainer, Dipl.-Ing.**
**Jahnstrasse 8**
**W-8011 Landsham(DE)**

(54) **Verfahren zum Betreiben eines nachrichtentechnischen Gerätes.**

(57) Nachrichtentechnische Geräte verfügen über immer mehr Gerätefunktionen mit denen beispielsweise in Fernseh- und VCR-Geräten die Bildqualität verbessert (Rausch-, Cross-Color- und Interferenz-Reduktion usw.) als auch interessante Effekte (z. B. Bild-im-Bild, Zoom, Standbild, Darstellung von Zeitsequenzen usw.) erzielt werden können. Die Erfindung beschreibt ein Verfahren, bei dem mehrere dieser Gerätefunktionen nacheinander automatisch vorgeführt werden, um so in einfacher Weise dem Benutzer die Möglichkeiten des nachrichtentechnischen Gerätes zu demonstrieren.

EP 0 417 728 A2

## VERFAHREN ZUM BETREIBEN EINES NACHRICHTENTECHNISCHEN GERÄTES

Die Erfindung betrifft ein Verfahren zum Betreiben eines nachrichtentechnischen Gerätes nach dem Oberbegriff des Anspruches 1.

Nachrichtentechnische Geräte zur Bilddarstellung, wie Fernsehgeräte und VCR-Geräte, verfügen über immer mehr Gerätefunktionen, mit denen beispielsweise die Bildqualität verbessert (Rausch-, Cross-Color- und Interferenz-Reduktion usw.) als auch interessante Effekte (Bild im Bild, Zoomen, Standbild, Darstellung von Zeitsequenzen usw.) erzielt werden können. Von Siemens wurde ein digitales Fernsehkonzept entwickelt, das unter anderem die obengenannten Gerätefunktionen aufweist und unter dem Namen Featurebox 88 beispielsweise in Siemens Components 26, 1988, Heft 6, Seite 240 bis 245 beschrieben ist. Die Gerätefunktionen sind dort ausführlich erläutert, so daß hier nicht mehr weiter darauf eingegangen zu werden braucht.

Um die Vielfalt der möglichen Gerätefunktionen eines modernen digitalen Farbfernsehempfängers dem Interessenten und möglichen Käufer vorführen zu können, bedarf es jedoch eines besonders geschulten Personals, das bereits mit der Bedienung dieses Farbfernsehgerätes vertraut ist. Jede der möglichen Gerätefunktionen sollte so z. B. während eines Verkaufsgespräches vorgeführt werden, um den Kunden umfassend über die Möglichkeiten des neuen Farbfernsehgerätes zu informieren. Steht solch speziell ausgebildetes Personal nicht zur Verfügung, wird der Interessent nur noch unzureichend über die Gerätefunktionen informiert. Damit werden unter Umständen die Verkaufsmöglichkeiten ungenügend ausgenutzt.

Der vorliegenden Erfindung liegt deshalb die Aufgabe zugrunde, ein Verfahren anzugeben, mit dem es in einfacher Weise möglich ist, die zur Verfügung stehenden Gerätefunktionen in einem nachrichtentechnischen Gerät vorzuführen.

Diese Aufgabe wird durch die kennzeichnenden Merkmale des Anspruchs 1 gelöst.

Weiterbildungen der Erfindung sind Gegenstand der Unteransprüche.

Die Erfindung wird im folgenden anhand eines Farbfernsehgerätes näher erläutert.

Zur Durchführung des erfindungsgemäßen Verfahrens kann beispielsweise ein automatisch arbeitendes Demonstrations-Gerät vorgesehen sein, das die Form einer Infrarot-Fernbedienung haben kann. Dieses Gerät enthält eine Steuereinrichtung, beispielsweise einen Mikroprozessor, mit einer Demonstrations-Software. Betätigt der Verkäufer beispielsweise die Demonstrations-Start-Taste dieser Fernbedienung, so läuft ein Programm ab, das eine Sequenz von Steuerbefehlen generiert, so daß automatisch mehrere Gerätefunktionen zeitlich aufeinander folgend vorgeführt werden. Die zeitliche Reihenfolge der darzustellenden Gerätefunktionen wird durch die Steuereinrichtung bestimmt. Die Steuerbefehle können beispielsweise per Ultraschall oder optisch mit Infrarotlicht übertragen werden. Damit sind im Farbfernsehgerät keinerlei kostenerhöhenden Extraaufwendungen notwendig. Die Steuerbefehle können jedoch auch über eine Kabelverbindung dem Farbfernsehgerät zugeführt werden.

Folgende Funktionen können beispielsweise hintereinander auf dem Bildschirm dargestellt werden:

A. Tuner-Scanning mit 9-Fach-Bild

Die Steuereinrichtung wählt hintereinander die Programme 1 bis 9 aus, so daß der Betrachter einen schnellen Überblick über die zur Zeit gesendeten Fernsehprogramme hat. Anschließend werden -falls nötig - die Programme 10 bis 18 aufgerufen. Ein (z. B. per Videotext) eingeblendeter erklärender Text gibt an, daß der Kunde sich jetzt ein bestimmtes Programm (auswählen und per Fern bedienung groß auf dem Bildschirm darstellen kann. Dies wird dann automatisch ausgeführt.

B. Darstellung einer Zeitsequenz (Photo-finish), bei der mehrere z. B. neun aufeinanderfolgende Bilder im Abstand von ca. 0,5 sec dargestellt werden.

C. Bild-In-Bild in verschiedenen Größen und verschiedenen Positionen des eingeblendeten Kleinbildes und Austausch von Großbild gegen Kleinbild.

D. Zoom-Effekt ein- und ausschalten und verändern des zu vergrößernden Bildausschnittes.

E. Standbild ein- und ausschalten.

F. Vorführung der Rausch-, Cross-Color- und Interferenz-Reduktion durch wiederholtes Ein- und Ausschalten und durch Splits-Screen, bei dem beispielsweise die linke Bildhälfte verrauscht und die rechte Bildhälfte rauschbefreit dargestellt wird. Per Bildschirmtext kann ein entsprechender Text auf dem Bildschirm eingeblendet werden.

G. Darstellung von Bildmanipulationen, beispielsweise Mosaik, Graphik invertieren usw.

Die Reihenfolge in der Darstellung der Gerätefunktionen kann natürlich auch vertauscht werden. Ebenso ist es möglich, die eine oder andere Gerätefunktion wegzulassen oder andere Gerätefunktionen hinzuzufügen. Dies ist jedoch in einfacher Weise durch Programmieren der Steuereinrichtung möglich.

Mit dem hier vorgestellten erfindungsgemäßen Verfahren kann auch die von der Steuereinrichtung generierte Sequenz von Steuerbefehlen und das damit verbundene Vorführen der Gerätefunktionen pausenlos wiederholt werden.

Das bereits erwähnte Demonstrationsgerät zur Durchführung des erfindungsgemäßen Verfahrens kann wie eine bekannte Fernbedienung ausgeführt werden und zusätzliche Tasten wie beispielsweise Demo-Start/Stop, Demo-Repeat und weitere enthalten, die verschiedene Arten von Demo-Programme aufrufen. Zweckmäßigerweise wird ein Mikroprozessor mit externem EPROM eingesetzt. Das EPROM kann je nach gewünschtem Demo-Programm programmiert sein.

Bei der Kombination des Demonstrationsgerätes mit der normalen Fernbedienung des Farbfernsehgerätes ist es von Vorteil, daß der Verkäufer nur ein Gerät in die Hand zu nehmen braucht und er sowohl das Demo-Programm ablaufen lassen als auch die Gerätefunktionen einzeln wie üblich fernbedient vorführen kann.

Eine andere Möglichkeit, das Demonstrations-Gerät zu realisieren, besteht darin, daß das Demonstrations-Gerät in die dem Farbfernsehgerät ohnehin beigefügte Fernbedienung integriert ist. Der Benutzer kann dann mit der Demo-Funktion auf die Wirkungsweise und auf die Bedienungseigenheiten hingewiesen werden und lernt so spielend, später die entsprechenden Gerätefunktionen per Fernbedienung selbst einzustellen. Dies kann eine Ergänzung zu der üblichen Benutzerführung per Bildschirm sein. Bei solchen in Massenproduktion hergestellten Fernbedienungen mit Demo-Programm ist die dazu erforderliche Software in einer Speichereinrichtung des Fernbediengebers, der die Steuereinrichtung enthält, untergebracht. Dies bedingt nur geringe Mehrkosten.

Falls das Farbfernsehgerät einen Bus-Eingang hat, beispielsweise einen D$^2$B- oder I$^2$C-Bus, kann das Demonstrationsgerät auch über eine Kabelverbindung dort angeschlossen werden. Natürlich ist es auch möglich, das Demonstrationsgerät zur Stromversorgung mit einem Netzkabel oder mit Solarzellen auszurüsten.

Selbstverständlich kann das erfindungsgemäße Verfahren und das beschriebene Demonstrationsgerät zur Durchführung des Verfahrens auch für Videorekorder eingesetzt werden.

## Ansprüche

1. Verfahren zum Betreiben eines nachrichtentechnischen Gerätes, insbesondere zur Bilddarstellung, das eine Vielzahl von Gerätefunktionen aufweist, die jeweils einzeln durch manuelles Betätigen einer Direkt- oder Fernbedienung und dem damit verbundenen Generieren von Steuerbefehlen aktivierbar sind,
**dadurch gekennzeichnet,**
daß zu Demonstrationszwecken eine Steuereinrichtung aktivierbar ist, die eine Sequenz von Steuerbefehlen generiert, so daß automatisch mindestens mehrere der Gerätefunktionen zeitlich aufeinanderfolgend aktiviert werden.

2. Verfahren nach Anspruch 1,
**dadurch gekennzeichnet,**
daß die Steuereinrichtung als zusätzliche Fernbedienung ausgebildet ist und die Sequenz von Steuerbefehlen dem nachrichtentechnischen Gerät drahtlos oder über eine Kabelverbindung zugeführt wird.

3. Verfahren nach Anspruch 1,
**dadurch gekennzeichnet,**
daß die Steuereinrichtung in die Fernbedienung des nachrichtentechnischen Gerätes integriert ist und über Steuertasten aktivierbar wird.

4. Verfahren nach einem der Ansprüche 1 bis 3,
**dadurch gekennzeichnet,**
daß die Übertragung der Steuerbefehle von der Steuereinrichtung zum nachrichtentechnischen Gerät optisch, insbesondere durch Infrarotsignale erfolgt.

5. Verfahren nach einem der Ansprüche 1 bis 4,
**dadurch gekennzeichnet,**
daß mindestens teilweise folgende Gerätefunktionen durch die Steuereinrichtung aktivierbar sind:
- Tuner-Scanning mit Mehrfach-Bild,
- Darstellung einer Zeitsequenz, mit mehreren aufeinanderfolgenden Bildern,
- Bild im Bild,
- Zoom-Effekt,
- Standbild ein- und ausschalten
- Vorführung der Rausch-, Cross-Color- und Interferenz-Reduktion durch wiederholtes Ein- und Ausschalten und durch Splits-Screen, bei dem ein Bildteil rauscht und der andere Bildteil rauschbefreit dargestellt wird,
- Darstellung von Bildmanipulationen

6. Verfahren nach einem der Ansprüche 1 bis 5,
**dadurch gekennzeichnet,**
daß die durch die Steuereinrichtung generierbare Sequenz von Steuerbefehlen wiederholt wird.

7. Verfahren nach einem der Ansprüche 1 bis 6,
**dadurch gekennzeichnet,**
daß durch die Steuereinrichtung verschiedene Sequenzen von Steuerbefehlen generierbar sind, so daß verschiedene Kombinationen der Gerätefunktionen darstellbar sind.

8. Verfahren nach einem der Ansprüche 1 bis 7,
**dadurch gekennzeichnet,**
daß die Steuereinrichtung über Solarzellen mit Strom versorgt wird.

9. Verfahren nach einem der Ansprüche 1 bis 8,
**gekennzeichnet**
durch Verwendung in einem Bildschirmgerät, insbesondere Fernsehgerät.

10. Verfahren nach einem der Ansprüche 1 bis 8,
**gekennzeichnet**
durch die Verwendung in einem Gerät zur Bildaufzeichnung.

11. Verfahren nach Anspruch 9 oder 10,
**dadurch gekennzeichnet,**
daß während einer Vorführsequenz für jede gerade vorgeführte Gerätefunktion am Bildschirm des Fernsehgerätes oder einem Kontrollmonitores des Videorekorders ein Text eingeblendet wird, der die Gerätefunktion erläutert.